# EUROPÄISCHE PATENTSCHRIFT

(11) **EP 2 769 184 B1**
(45) Veröffentlichungstag und Bekanntmachung des Hinweises auf die Patenterteilung: **15.11.2017**
(21) Anmeldenummer: 12777871.0
(22) Anmeldetag: 27.09.2012
(51) Int. Cl.: G01P 21/00, G01N 29/04, G01D 5/244

(54) **PLAUSIBILITÄTSPRÜFUNG EINES SENSORSIGNALS**
PLAUSIBILITY CHECK OF A SENSOR SIGNAL
CONTRÔLE DE PLAUSIBILITÉ D'UN SIGNAL DE CAPTEUR

(30) Priorität: 19.10.2011 DE 102011084784
(43) Veröffentlichungstag der Anmeldung: 27.08.2014
(73) Patentinhaber: Robert Bosch GmbH, 70442 Stuttgart (DE)
(72) Erfinder: RAUH, Christian, 81377 München (DE); KORN, Christian, 70190 Stuttgart (DE); HILD, Hansjoerg Markus, 71292 Friolzheim (DE); KOERNER, Olaf, 22457 Hamburg (DE); RITTLER, Stephan, 73660 Urbach (DE)
(86) Internationale Anmeldenummer: PCT/EP2012/069046
(87) Internationale Veröffentlichungsnummer: WO 2013/056966

(56) Entgegenhaltungen:
- EP-A1- 2 289 740
- EP-A1- 2 347 934
- WO-A1-03/042005
- WO-A1-2005/109132
- DE-A1- 19 704 313
- DE-B4- 10 084 602
- JP-A- H09 076 872
- US-A1- 2008 270 162

## Beschreibung

### Stand der Technik

Die Erfindung geht aus von einem Verfahren zur Plausibilisierung von Sensorsignalen sowie von einem Verfahren zur Ausgabe eines Auslösesignals nach der Gattung des unabhängigen Patentanspruchs 1 und von einer Vorrichtung zur Ausgabe eines Auslösesignals. Aus dem Stand der Technik bekannte Verfahren und Vorrichtungen zur Plausibilisierung von Sensorsignalen stellen sicher, dass im Falle eines defekten Sensorelements kein unerwünschtes Verhalten eines Systems insbesondere eines Sicherheitssystems auftritt. Je nach Messprinzip und/oder Art der Sensorelemente und/oder des Sensorsignals und/oder der Anordnung der Sensorelemente, sind unterschiedliche Funktionsweisen der Verfahrens und Vorrichtungen bekannt. Üblicherweise umfassen Vorrichtungen zur Plausibilisierung von Sensorsignalen zwei Sensorelemente, wobei erste Sensorsignale eines ersten Sensorelements auf Plausibilität überprüft werden, und zweite Sensorsignale eines zweiten Sensorelements zum Plausibilisieren der ersten Sensorsignale herangezogen werden. Werden die ersten Sensorsignale des ersten Sensorelements, als plausibel erkannt, so wird davon ausgegangen, dass das erste Sensorelement nicht defekt ist.
In der Offenlegungsschrift DE 101 23 625 A1 werden ein Verfahren und eine Vorrichtung zur Überwachung einer Messwerterfassung einer physikalischen Größe beschrieben, bei welchen zwei redundante Messwerte einer physikalischen Größe vorliegen. Hierbei erfasst ein erstes Sensorelement einen ersten Messwert und ein zweites Sensorelement erfasst einen zweiten Messwert. Bei der Plausibilisierung wird der Quotient der beiden Messwerte gebildet, welcher mit einem Toleranzbereich verglichen wird. Bei einer

und ein zweites Sensorelement erfasst einen zweiten Messwert. Bei der Plausibilisierung wird der Quotient der beiden Messwerte gebildet, welcher mit einem Toleranzbereich verglichen wird. Bei einer unzulässigen Abweichung des Quotienten vom Toleranzbereich wird von einem Fehlerzustand eines Sensorelements ausgegangen.

In der EP 2 289 740 A1 werden ein Erkennungsverfahren und eine Erkennungsvorrichtung offenbart, welche geeignet sind zu erkennen, dass das Fahrzeug von der Fahrbahn abgekommen ist und im Straßengraben fährt. Das Erkennungsverfahren wertet die Signale von mehreren Sensoren aus und erkennt das Befahren des Straßengrabens, wenn ein erstes Beschleunigungssignal eines ersten Sensors einen vorgegebenen Schwellwert überschreitet und innerhalb eines vorgegebenen Erkennungswertebereichs liegt. Ein von mindestens einem weiteren Sensor ausgegebenes Signal, das beispielsweise einen Wert für eine Beschleunigung oder eine Rollrate oder eine Raddrehzahl repräsentiert, wird im Zusammenhang mit einer Plausibilitätsprüfung des Ereignisses dahingehend ausgewertet, ob das zusätzliche Signal einen vorgegebenen Schwellwert überschreitet. Erst wenn auch das zusätzliche Signal den vorgegebenen Schwellwert überschritten hat, erkennt das Erkennungsverfahren, dass das Fahrzeug die Fahrbahn verlassen hat und in den Straßengraben fährt. Dadurch können Messfehler des ersten Sensors erkannt werden.

In der EP 2 347 934 A1 werden ein Verfahren und eine Vorrichtung zur Erkennung eines Seitencrashs in einem Fahrzeug offenbart. Das Verfahren korreliert die Signale von mehreren Sensoren und wertet die korrelierten Signale aus. Hierbei werden Werte für die Längsbeschleunigung und die Querbeschleunigung erfasst und aufsummiert, um die Summe der wirksamen Längsbeschleunigung und die Summe der wirksamen Querbeschleunigung zu bilden. Hierbei zeigt eine von einem ersten Sensor zur Verfügung gestellte erste Sensorinformation einen Seitencrash in einem ersten Fahrzeugbereich an und eine von einem zweiten Sensor zur Verfügung gestellte zweite Sensorinformation zeigt einen Seitencrash in einem zweiten Fahrzeugbereich an. Die beiden Sensoren sind in Fahrzeuglängsrichtung versetzt zueinander angeordnet. Ein Seitencrash wird erkannt, wenn die korrelierten Werte innerhalb eines vorgegebenen Wertebereichs liegen und die Sensorinformationen einen Seitencrash anzeigen.

In der WO 2005/109132 A1 werden eine Einrichtung und ein Verfahren zum fehlersicheren Erfassen von Messwerten in einer Steuereinheit offenbart. Die Einrichtung zum fehlersicheren Erfassen von Messwerten in einer Steuereinheit weist einen Geber zum Erfassen von Messsignalen auf. Es sind unabhängig voneinander arbeitende Auswerteeinrichtungen zum redundanten Ermitteln von Messwerten aus den Messsignalen des Gebers vorgesehen. Darüber hinaus erfolgt das Übermitteln der Daten an die Steuereinheit mittels fehlersicherer Übermittlungseinrichtungen. Hierbei sind eine erste Auswerteeinrichtung zum Ermitteln eines Messwertes und eine zweite Auswerteeinrichtung zum Ermitteln eines groben Vergleichswertes geringerer Genauigkeit vorgesehen. Zudem ist eine Einrichtung zum Feststellen der Fehlerfreiheit des Messwertes durch Überprüfen mit dem Vergleichswert vorgesehen.
In der Offenlegungsschrift DE 10 2004 042 467 A1 werden ein Verfahren und eine Vorrichtung zur Erzeugung eines Auslösesignals für eine Fußgängerschutzvorrichtung beschrieben, welche nach einer erkannten Kollision mit einem Objekt eine Auslöseüberprüfung und eine Plausibilitätsprüfung der Sensorsignale durchführen. Hierbei wird zur Erkennung eines Fußgängers mit den Sensorsignalen eine Merkmalsextraktion ausgeführt, welche den Auftreffpunkt des Objekts bestimmt und ein Auslösesignal für ein Fußgängerschutzsystem erzeugt, wenn bei einer Auslöseüberprüfung eine Kollision mit einem Fußgänger erkannt wird und die Plausibilitätsüberprüfung der Sensorsignale positiv ist. Die Vorrichtung zur Plausibilisierung der Sensorsignale vergleicht die kollisionsrelevanten Sensorsignale mit Sensorsignalen einer zentralen Beschleunigungssensoreinheit.

### Offenbarung der Erfindung

gemäß Anspruch 1 Ein Verfahren zur Plausibilisierung von Sensorsignalen, das erfindungsgemäße Verfahren zur Ausgabe eines Auslösesignals und eine Vorrichtung zur Ausgabe eines Auslösesignals mit den Merkmalen des Anspruchs 1 haben demgegenüber den Vorteil, dass zumindest ein erstes Sensorelement mindestens einen ersten Zuverlässigkeitsbereich mit einer Obergrenze und/oder einer Untergrenze aufweist. Hierbei wird der mindestens eine erste Zuverlässigkeitsbereich auf eine von einem zweiten Sensorelement erfasste zweite physiklasche Größe bezogen. Ein vom ersten Sensorelement erfasster aktueller Wert einer ersten physikalischen Größe wird als plausibel erkannt, wenn ein vom zweiten Sensorelement aktueller erfasster Wert der zweiten physikalischen Größe innerhalb des korrespondierenden ersten Zuverlässigkeitsbereichs des ersten Sensorelements liegt. Der mindestens eine Zuverlässigkeitsbereich kann beispielsweise nur durch eine Obergrenze bzw. nur durch eine Untergrenze bzw. sowohl durch eine Obergrenze als auch durch eine Untergrenze definiert werden. Ausführungsformen der vorliegenden Erfindung ermöglichen durch den mindestens einen ersten Zuverlässigkeitsbereich eine Plausibilitätsüberprüfung, welche unplausible erste Sensorsignale auch bei funktionstüchtigen bzw. nicht defekten ersten Sensorelementen erkennt. Ein erstes Sensorelement mit einem auf eine zweite physikalische Größe bezogenen Zuverlässigkeitsbereich, misst zuverlässige und genaue Messwerte, wenn die Werte der zweiten physikalischen Größe innerhalb des korrespondierenden Zuverlässigkeitsbereichs liegen. Liegt der Wert der zweiten physikalischen Größe außerhalb des mindestens einen ersten Zuverlässigkeitsbereichs, dann kann beispielsweise die Messgenauigkeit des ersten Sensorelements beeinträchtigt sein. In diesem Fall werden in vorteilhafter Weise unzuverlässige und/oder ungenau ermittelte Sensorsignale nicht für eine Systementscheidung und einer damit verbundenen Ausgabe eines Auslösesignals herangezogen. Dies kann in vorteilhafter Weise die Anzahl von Fehlauslösungen von Sicherheitssystemen, insbesondere von irreversiblen Sicherheitssystemen wie beispielsweise Airbags, reduzieren.

Entsprechend eines Verfahrens zur Plausibilisierung eines Sensorsignals, insbesondere eines sicherheitsrelevanten Sensorsignals in einem Kraftfahrzeug, wird mindestens eine erste physikalische Größe von einem ersten Sensorelement erfasst und als erstes Sensorsignal ausgegeben, und eine zur ersten physikalischen Größe korrelierte zweite physikalische Größe wird von einem zweiten Sensorelement erfasst und als zweites Sensorsignal ausgegeben. Es weist zumindest das erste Sensorelement mindestens einen ersten Zuverlässigkeitsbereich mit einer Obergrenze und/oder einer Untergrenze auf, welcher auf die vom zweiten Sensorelement erfasste zweite physiklasche Größe bezogen wird. Ein vom ersten Sensorelement erfasster aktueller Wert der ersten physikalischen Größe wird als plausibel erkannt, wenn ein vom zweiten Sensorelement aktueller erfasster Wert der zweiten physikalischen Größe innerhalb des korrespondierenden ersten Zuverlässigkeitsbereichs des ersten Sensorelements liegt.
Ausführungsformen eines erfindungsgemäßes Verfahrens zur Ausgabe eines Auslösesignals, insbesondere zum Auslösen eines sicherheitsrelevanten Systems in einem Kraftfahrzeug, werten ein erstes von einem ersten Sensorelement erzeugtes Sensorsignal und ein zweites von einem zweiten Sensorelement erzeugtes Sensorsignal aus. Zur Überwachung eines Auslösekriteriums wird das aktuelle erste Sensorsignal mit einem ersten Schwellwert verglichen. Erfindungsgemäß wird das Auslösekriterium erfüllt und das Auslösesignal ausgegeben, wenn das aktuelle erste Sensorsignal des ersten Sensorelements den zugeordneten ersten Schwellwert übersteigt und wenn durch ein Verfahren zur Plausibilisierung eines Sensorsignals mindestens das erste Sensorsignal des ersten Sensorelements als plausibel erkannt wird. Zur Plausibilisierung eines Sensorsignals weist zumindest das erste Sensorelement einen ersten Zuverlässigkeitsbereich mit einer Obergrenze und/oder einer Untergrenze auf, welcher auf die vom zweiten Sensorelement erfasste zweite physiklasche Größe bezogen wird. Ein vom ersten Sensorelement erfasster aktueller Wert der ersten physikalischen Größe wird als plausibel erkannt, wenn ein vom zweiten Sensorelement aktueller erfasster Wert der zweiten physikalischen Größe innerhalb des korrespondierenden ersten Zuverlässigkeitsbereichs des ersten Sensorelements liegt.

Eine Vorrichtung zur Ausgabe eines Auslösesignals, insbesondere zum Auslösen eines sicherheitsrelevanten Systems in einem Kraftfahrzeug, umfasst ein erstes Sensorelement, welches eine erste physikalische Größe erfasst und als erstes Sensorsignal ausgibt, und ein zweites Sensorelement, welches eine zur ersten physikalischen Größe korrelierte zweite physikalische Größe erfasst und als zweites Sensorsignal ausgibt. Zur Überwachung eines Auslösekriteriums für ein Auslösesignal vergleicht eine Auswerte- und Steuereinheit das aktuelle erste Sensorsignal mit einem ersten Schwellwert. Es weist zumindest das erste Sensorelement mindestens einen ersten Zuverlässigkeitsbereich mit einer Obergrenze und/oder einer Untergrenze auf, welcher auf die vom zweiten Sensorelement erfasste zweite physiklasche Größe bezogen ist. Die Auswerte- und Steuereinheit erkennt einen vom ersten Sensorelement erfassten aktuellen Wert der ersten physikalischen Größe als plausibel, wenn ein vom zweiten Sensorelement aktuell erfasster Wert der zweiten physikalischen Größe innerhalb des korrespondierenden ersten Zuverlässigkeitsbereichs des ersten Sensorelements liegt. Das Auslösekriterium ist erfüllt, wenn das aktuelle erste Sensorsignal des ersten Sensorelements den zugeordneten ersten Schwellwert übersteigt und mindestens das erste Sensorsignal des ersten Sensors als plausibel erkannt ist. Die Auswerte- und Steuereinheit gibt ein Auslösesignal aus, wenn das Auslösekriterium erfüllt ist. Es wird zur Überwachung des Auslösekriteriums neben dem aktuellen ersten Sensorsignal zusätzlich auch das aktuelle zweite Sensorsignal mit einem zweiten Schwellwert verglichen. In diesem Fall ist das Auslösekriterium nur dann erfüllt, wenn das aktuelle erste Sensorsignal des ersten Sensorelements den zugeordneten ersten Schwellwert übersteigt und das aktuelle zweite Sensorsignal des zweiten Sensorelements den zugeordneten zweiten Schwellwert übersteigt und wenn durch ein Verfahren zur Plausibilisierung eines Sensorsignals mindestens das erste Sensorsignal des ersten Sensorelements als plausibel erkannt wird.

Unter einem Sensorelement wird vorliegend eine Baueinheit verstanden, welche eine physikalische Größe bzw. eine Änderung einer physikalischen Größe direkt oder indirekt erfasst und vorzugsweise in ein elektrisches Sensorsignal umwandelt. Dies kann beispielsweise über das Empfangen von Schall- und/oder Körperschallwellen, und/oder über eine Positionsänderung und/oder eine Wegänderung und/oder andere bekannte Detektionsmethoden erfolgen. Die Ermittlung der Sensorsignale kann statisch und/oder dynamisch erfolgen. Des Weiteren kann die Ermittlung der Sensorsignale fortlaufend oder einmalig durchgeführt werden.

Die ermittelten Sensorsignale können von einer Auswerte- und Steuereinheit ausgewertet werden, welche in das Sensorelement integriert ist und/oder außerhalb des Sensorelements, beispielsweise in einer Sensoreinheit und/oder in einem Steuergerät angeordnet ist. Hierbei können beispielsweise Offsets abgezogen und andere mathematische Operationen durchgeführt werden, um die ermittelten Sensorsignale aufzubereiten bzw. weiterzuverarbeiten. Auf diese Weise kann beispielsweise aus einer ersten erfassten physikalischen Größe eine weitere von der ersten physikalischen Größe abhängige Größe berechnet werden, wie beispielsweise Geschwindigkeiten, Umdrehungszahlen, Kräfte, Energien, Wahrscheinlichkeiten für ein bestimmtes Ereignis usw.

Unter der Auswerte- und Steuereinheit kann vorliegend ein elektrisches Gerät, wie beispielsweise ein Steuergerät verstanden werden, welches erfasste Sensorsignale verarbeitet und/oder auswertet. Die Auswerte- und Steuereinheit kann mindestens eine Schnittstelleneinheit aufweisen, die hard- und/oder softwaremäßig ausgebildet sein kann. Bei einer hardwaremäßigen Ausbildung können die Schnittstelleneinheiten beispielsweise Teil eines sogenannten System-ASICs sein, der verschiedenste Funktionen der Auswerte- und Steuereinheit beinhaltet. Es ist jedoch auch möglich, dass die Schnittstelleneinheiten eigene, integrierte Schaltkreise sind oder zumindest teilweise aus diskreten Bauelementen bestehen. Bei einer softwaremäßigen Ausbildung können die Schnittstelleneinheiten Softwaremodule sein, die beispielsweise auf einem Mikrocontroller neben anderen Softwaremodulen vorhanden sind. Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung der Auswertung verwendet wird, wenn das Programm von der Auswerte- und Steuereinheit ausgeführt wird.
Unter Plausibilisierung bzw. Plausibilisierungskontrolle wird eine Methode verstanden, in deren Rahmen ein Ergebnis bzw. ein Wert einer ermittelten physikalischen Größe daraufhin überprüft wird, ob dieser annehmbar und/oder einleuchtend und/oder nachvollziehbar und/oder plausibel ist. Insbesondere wird das Eintreffen einer Crashsituation als Ereignis angenommen und auf Plausibilität überprüft.
Durch die in den abhängigen Ansprüchen aufgeführten Maßnahmen und Weiterbildungen sind vorteilhafte Verbesserungen des im unabhängigen Patentanspruch 1 angegebenen Verfahrens zur Ausgabe eines Auslösesignals möglich. Besonders vorteilhaft ist, dass die Sensorelemente die physikalischen Größen mit gleichen Messprinzipien und/oder mit verschiedenen Messprinzipien an gleichen und/oder verschiedenen Messorten erfassen können. Auf diese Weise kann auf vielfältige Art und Weise auf ein Ereignis geschlossen werden. Des Weiteren können verschiedenste Umweltbedingungen, welche die Messgenauigkeit des Sensorelements einschränken können, untersucht und für die Plausibilisierung verwendet werden. Messfehler und/oder Ungenauigkeiten der Messergebnisse durch äußere Einflüsse können somit in vorteilhafter Weise nahezu ausgeschlossen werden. Des Weiteren können zusätzliche bekannte Plausibilisierungsmethoden zur Absicherung herangezogen werden, ohne dass diese negativ beeinflusst werden. Auf diese Weise wird in vorteilhafter Weise sichergestellt, dass ausschließlich plausible und verlässliche Sensordaten zur Weiterverarbeitung und/oder zum Auslösen einer korrespondierenden Sicherheitsfunktion ausgegeben werden.

In vorteilhafter Ausgestaltung des Verfahrens zur Plausibilisierung von Sensorsignalen können durch die beiden Sensorelemente beispielsweise Beschleunigungen und/oder Drücke und/oder Körperschalle und/oder Drehraten erfasst werden. So können beispielsweise Drehratensensoren einen Zuverlässigkeitsbereich bezüglich der aktuell wirksamen Beschleunigung auf weisen. Misst ein Beschleunigungssensor an einem vergleichbaren Messort die Beschleunigung, kann in vorteilhafter Weise experimentell und/oder über das Design eine zuverlässige Funktion des Drehratensensors gewährleistet werden, wenn die erfassten aktuellen Beschleunigungswerte innerhalb des Zuverlässigkeitsbereichs des Drehratensensors liegen. Dies ermöglicht in vorteilhafter Weise den Einsatz von Drehratensensoren zur Crasherkennung, wobei ungenaue und/oder unplausibel Sensorsignalwerte der Drehratensensoren aufgrund von zu hohen Beschleunigungswerten erkannt werden können. Ebenso können die Werte von weiteren Sensorelementen zusätzlich überprüft und zur Plausibilisierung der ersten Sensorsignale des ersten Sensorelements bei der Crasherkennung herangezogen werden, wenn die von den weiteren Sensorelementen erfassten physikalischen Größen ebenfalls mit der von dem ersten Sensorelement erfassten physikalischen Größe korreliert ist.
Besonders vorteilhaft ist, dass zur Ausgabe eines Auslösesignals die Sensorelemente crashrelevante physikalische Größen erfassen. Dies garantiert in vorteilhafter Weise, dass die Sensoreinheiten auf ein identisches Ereignis, wie beispielsweise ein Crashereignis reagieren. Bei einem Crash verändern sich durch den Aufprall die erfassten physikalischen Größen, beispielsweise Drücke und/oder Drehraten und/oder Schalle und/oder Beschleunigungen. Das heißt, dass die ermittelten Messgrößen durch das gemeinsame Ereignis korreliert sind und dieses Ereignis anzeigen.
In vorteilhafter Ausgestaltung des erfindungsgemäßen Verfahrens aktiviert das Auslösesignal ein sicherheitsrelevantes System. In vorteilhafter Weise wird ein sicherheitsrelevantes System durch die zuverlässige Crasherkennung zuverlässig aktiviert und ein zu frühes- und/oder Fehlauslösen aufgrund ungenauer Sensorsignale verhindert.

In vorteilhafter Ausgestaltung der Vorrichtung erfassen die Sensorelemente crashrelevante physikalische Größen mit gleichen Messprinzipien und/oder mit verschiedenen Messprinzipien an gleichen und/oder verschiedenen Messorten. Auf diese Weise kann durch die Vorrichtung auf vielfältige Art und Weise auf ein Ereignis und vor allem auf einen Crash geschlossen werden. Des Weiteren können verschiedenste Umweltbedingungen, welche die Messgenauigkeit der Sensoren einschränken, untersucht und zur Plausibilisierung des ersten Sensorsignals des ersten Sensorelements verwendet werden. Messfehler und/oder Ungenauigkeiten der Messergebnisse durch äußere Umstände können somit in vorteilhafter Weise nahezu ausgeschlossen werden. Insbesondere können Messergebnisse, deren Zusammenhang mit der äußeren Anregung durch mögliche Verfälschungen durch andere physiklasche Größen unklar ist, ausgefiltert werden. Des Weiteren können in vorteilhafter Weise zusätzliche bekannte Plausibilisierungsmethoden zur Absicherung herangezogen werden. Auf diese Weise wird in vorteilhafter Weise sichergestellt, dass ausschließlich plausible und verlässliche Sensordaten zur Weiterverarbeitung und/oder zur Ausgabe eines Auslösesignals verwendet werden.
In weiterer vorteilhafter Ausgestaltung der Vorrichtung erfassen die beiden Sensorelemente beispielsweise Beschleunigungen und/oder Drücke und/oder Körperschalle und/oder Drehraten. In vorteilhafter Weise kann experimentell und/oder über das Design eine zuverlässige Funktion des Sensorelements, dessen Messwerte plausibilisiert werden, gewährleistet werden. Da Beschleunigungen und/oder Drücke und/oder Körperschalle und/oder Drehraten physikalische Größen sind, welche in einer Crashsituation verändert werden und das Messergebnis eines Sensorelements beeinflussen können, welches eine der physikalischen Größen erfasst, ermöglicht die Einführung eines korrespondierenden Zuverlässigkeitsbereichs für diese physikalischen Größen im zu plausibilisierenden Sensorelement in vorteilhafter Weise durch die Anwendung dieser anderen Sensorelemente eine genauere Zuverlässigkeitsaussage der Sensorsignale des zu plausibilisierenden Sensorelements bei der Crashsensierung, wobei ungenaue und/oder unplausibel Messwerte erkannt werden können.

In weiterer vorteilhafter Ausgestaltung der Vorrichtung sind die Schwellwerte und/oder der mindestens eine Zuverlässigkeitsbereich in einer Speichereinheit hinterlegt. Auf die gespeicherten Werte kann in vorteilhafter Weise schnell zugegriffen werden. Des Weiteren ist eine solche Speichereinheit im Normalfall in der Auswerte- und Steuereinheit vorhanden, weshalb keine zusätzlichen Kosten entstehen.
Im Zusammenhang mit der vorliegenden Erfindung wird unter einem Crash nicht nur der Aufprall mit einem anderen Objekt, wie einem Hindernis und/oder einem anderen Verkehrsteilnehmer, sondern auch ein Überschlag des Fahrzeugs (Rollover) verstanden.
Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen.

Kurze Beschreibung der Zeichnung
Fig. 1 zeigt ein schematisches Blockschaltbild eines Ausführungsbeispiels einer erfindungsgemäßen Vorrichtung zur Ausgabe eines Auslösesignals.
Fig. 2 zeigt ein schematisches Blockdiagramm eines Ausführungsbeispiels eines erfindungsgemäßen Verfahrens zur Plausibilisierung von Sensorsignalen und zur Ausgabe eine Auslösesignals.

### Ausführungsformen der Erfindung

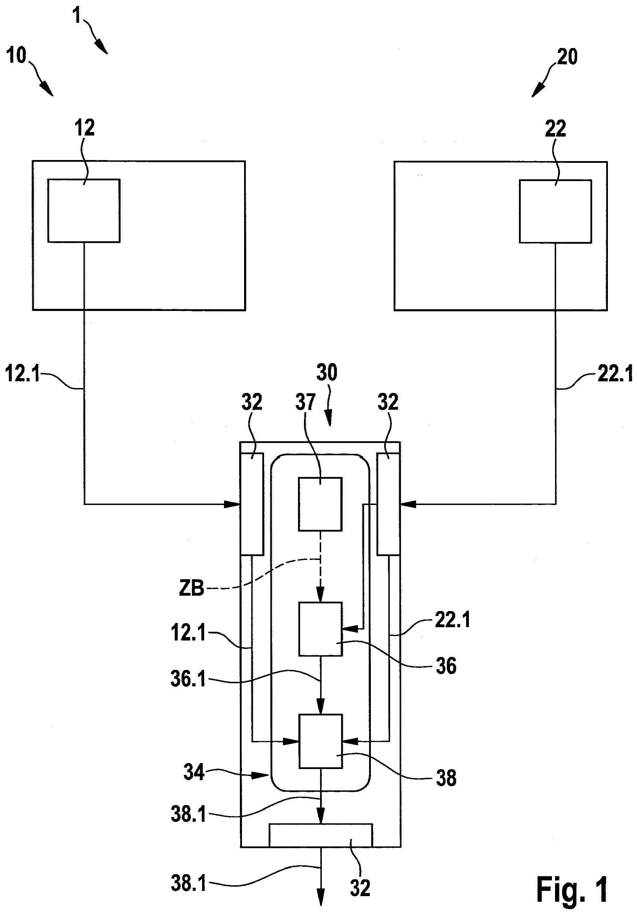

Die Erfindung ist in den Ansprüchen definiert. Zur Plausibilisierung von ersten Sensorsignalen eines ersten Sensorelements mit zweiten Sensorsignalen eines zweiten Sensorelements, sind verschiedene Verfahren bekannt. Beispielsweise können die ersten und zweiten Sensorsignale von Sensorelementen mit vergleichbaren Messprinzipien und gleichen Messorten erzeugt werden. Die ersten und zweiten Sensorsignale werden hierbei zyklisch ausgelesen und durch einer Auswerte- und Steuereinheit miteinander verglichen. Bei dieser Plausibilisierung können die Sensorsignale direkt und/oder über einen Quotienten und/oder über eine Differenz miteinander verglichen werden. Überschreitet beispielsweise die Differenz und/oder der Quotient der ersten und zweiten Sensorsignale eine definierte Grenze, werden die ersten Sensorsignale als ungültig und/oder das erste Sensorelement als defekt betrachtet.
Ebenso können die ersten und zweiten Sensorsignale von Sensorelementen mit vergleichbaren Messprinzipien und verschiedenen Messorten erzeugt werden. Des Weiteren können die ersten und zweiten Sensorsignale von Sensorelementen mit nicht vergleichbaren Messprinzipien und gleichen und/oder verschiedenen Messorten erzeugt werden. Bei dieser Plausibilisierung können die ersten Sensorsignale des ersten Sensorelements nicht direkt mit den zweiten Sensorsignalen des zweiten Sensorelements verglichen werden. Ein direkter Vergleich ist aufgrund unterschiedlicher Messorte bzw. Verbauorte, wie beispielsweise innerhalb eines Steuergerätes und außerhalb des Steuergerätes und/oder aufgrund unterschiedlicher Erfassungsrichtungen, wie beispielsweise in Fahrtrichtung und quer zur Fahrtrichtung, und/oder aufgrund nicht vergleichbaren Messprinzipien, bei denen beispielsweise unterschiedliche physikalische Größen erfasst werden, nicht sinnvoll. Bei einem solchem Plausibilisierungsverfahren wird beispielsweise überprüft, ob die ersten Sensorsignale einen vorgegebenen ersten Schwellwert und die zweiten Sensorsignale einen vorgegebenen zweiten Schwellwert überschreiten. Ist dies bei beiden Sensorsignalen der Fall, so wird der zu plausibilisierende erste Sensor als funktionsfähig und die ersten Sensorsignale als gültig betrachtet.
Wie aus Fig. 1 ersichtlich ist, umfasst das dargestellte Ausführungsbeispiel einer Vorrichtung 1 zur Erzeugung eines Auslösesignals 38.1, eine erste Sensoreinheit 10 mit einem ersten Sensorelement 12, welches eine erste physikalische Größe erfasst und als erstes Sensorsignal 12.1 ausgibt, und eine zweite Sensoreinheit 20 mit einem zweiten Sensorelement 22, welches eine zur ersten physikalischen Größe korrelierte zweite physikalische Größe erfasst und als zweites Sensorsignal 22.1 ausgibt. Zur Überwachung eines Auslösekriteriums für ein Auslösesignal 38.1 vergleicht eine Auswerte- und Steuereinheit 30 zumindest das aktuelle erste Sensorsignal 12.1 mit einem ersten Schwellwert.
Die im Ausführungsbeispiel dargestellte Auswerte- und Steuereinheit 30 weist hierbei drei Schnittstelleneinheiten 32 und eine Recheneinheit 34 auf. Die Recheneinheit 34 weist eine Speichereinheit 37, eine Plausibilisierungseinheit 36 und eine Entscheidungslogik 38 auf. Die Auswerte- und Steuereinheit 30 empfängt die ersten Sensorsignale 12.1 des ersten Sensorelements 12 und die zweiten Sensorsignale 22.1 des zweiten Sensorelements 22 über mindestens eine Schnittstelleneinheit 32 und wertet die empfangenen Sensorsignale 12.1, 22.1 in der Recheneinheit 34 aus. Durch die Auswertung können beispielsweise vorhandene Offsets abgezogen und/oder Mittelwerte bestimmt und/oder die Signalstärke durch Multiplikation mit einem Faktor erhöht werden. Alternativ kann die Auswertung auch in der ersten Sensoreinheit 10 und/oder in der zweiten Sensoreinheit 20 ausgeführt werden. Zu diesem Zweck können entsprechende Auswerte-einheiten in den Sensoreinheit10, 20 angeordnet werden.
Erfindungsgemäß weist zumindest das erste Sensorelement 12 mindestens einen ersten Zuverlässigkeitsbereich ZB mit einer Obergrenze und/oder einer Untergrenze auf. Der mindestens eine erste Zuverlässigkeitsbereich ZB bezieht sich auf die vom zweiten Sensorelement 22 erfasste zweite physikalische Größe. Die Plausibilisierungseinheit 36 der Auswerte- und Steuereinheit 30 erkennt einen vom ersten Sensorelement 12 erfassten aktuellen Wert der ersten physikalischen Größe als plausibel, wenn ein vom zweiten Sensorelement 22 aktuell erfasster Wert der zweiten physikalischen Größe innerhalb des korrespondierenden ersten Zuverlässigkeitsbereichs ZB des ersten Sensorelements 12 liegt. Im dargestellten Ausführungsbeispiel erfassen die Sensorelemente 12, 22 crashrelevante physikalische Größen mit gleichen Messprinzipien und/oder mit verschiedenen Messprinzipien an gleichen und/oder verschiedenen Messorten. Insbesondere können die Sensorelemente 12, 22 gleiche physikalische Größen unterschiedlich detektieren und/oder unterschiedliche physikalische Größen in gleichen oder unterschiedlichen Wertebereichen erfassen. Beispielsweise können die Sensorelemente 12, 22 die gleiche physikalische Größe erfassen, wobei die Auflösung eines der Sensorelemente 12, 22 genauer ist und/oder eines der Sensorelemente 12, 22 einen größeren Wertebereich aufweist und/oder die Sensorelemente 12, 22 die gleiche physikalische Größe an unterschiedlichen Messorten erfassen. Die beiden Sensorelemente 12, 22 können beispielsweise Beschleunigungen und/oder Drücke und/oder Körperschalle und/oder Drehraten erfassen.

Im dargestellten Ausführungsbeispiel können die gemessen Werte eines Drehratensensors 12 mit Hilfe eines Beschleunigungssensors 22 als plausibel erkannt werden, da die aktuelle Beschleunigung Einfluss auf die Genauigkeit des Messergebnisses des Drehratensensors 12 hat. In einer weiteren Variante können die Werte eines Drehratensensors 12 alternativ oder zusätzlich mit Hilfe eines Körperschallsensors als plausibel erkannt werden. Um eine schnellere Auswertung zu erzielen, sind die Schwellwerte und/oder der mindestens eine Zuverlässigkeitsbereich ZB in der Speichereinheit 37 hinterlegt.

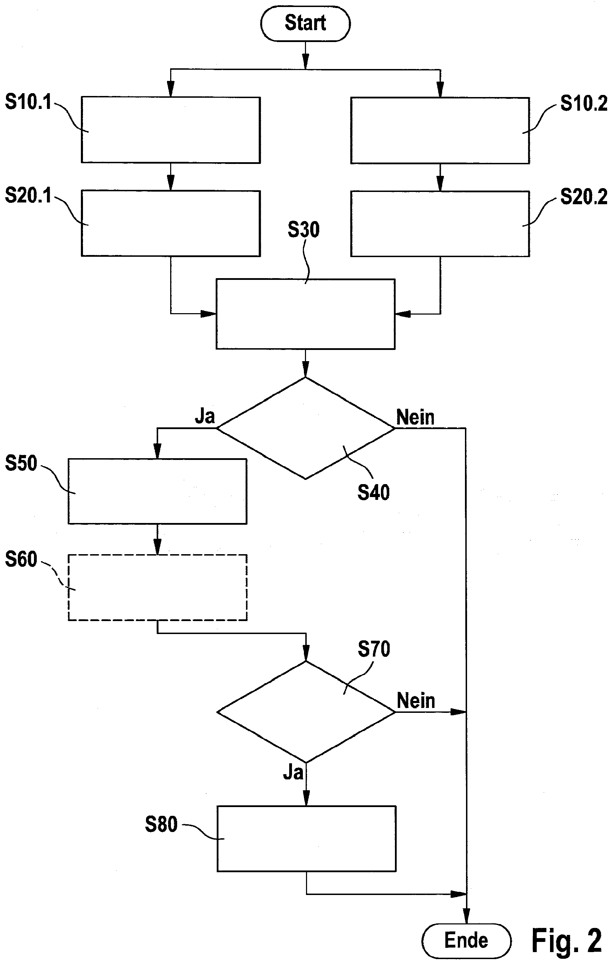

Die Entscheidungslogik 38 der Auswerte- und Steuereinheit 30 überprüft, ob das Auslösekriterium erfüllt ist. Das Auslösekriterium ist erfüllt, wenn zumindest das aktuelle erste Sensorsignal 12.1 des ersten Sensorelements 12 den zugeordneten ersten Schwellwert übersteigt und mindestens das erste Sensorsignal 12.1 des ersten Sensors 12 als plausibel erkannt ist. Die Auswerte- und Steuereinheit 30 gibt das Auslösesignal 38.1 über eine Schnittstelleneinheit 32 aus, wenn das Auslösekriterium erfüllt ist. Zur Überprüfung des Auslösekriterium gibt die Plausibilisierungseinheit 36 ein Plausibilisierungssignal 36.1 an die Entscheidungslogik 38 aus. Das Plausibilisierungssignal 36.1 sagt hierbei aus, ob der Wert der ersten physikalischen Größe plausibel ist oder nicht. Es vergleicht die Auswerte- und Steuereinheit 30 zur Überwachung des Auslösekriteriums neben dem aktuellen ersten Sensorsignal 12.1 zusätzlich auch das aktuelle zweite Sensorsignal 22.1 mit einem zweiten Schwellwert. Es ist das Auslösekriterium nur dann erfüllt, wenn das aktuelle erste Sensorsignal 12.1 des ersten Sensorelements 12 den zugeordneten ersten Schwellwert übersteigt und das aktuelle zweite Sensorsignal 22.1 des zweiten Sensorelements 22 den zugeordneten zweiten Schwellwert übersteigt und wenn zumindest das erste Sensorsignal 12.1 des ersten Sensorelements 12 als plausibel erkannt ist.
Wie aus Fig. 2 ersichtlich ist, wird in einem Verfahrensschritt S10.1 über ein erstes Sensorelement 12 mindestens eine erste physikalische Größe erfasst und als erstes Sensorsignal 12.1 ausgegeben. In einem Verfahrensschritt S10.2 wird über ein zweites Sensorelement 22 eine zur ersten physikalischen Größe korrelierte zweite physikalische Größe erfasst und als zweites Sensorsignal 22.1 ausgegeben. Hierbei resultieren die gemessenen physikalischen Größen aus demselben Ereignis wie beispielsweise einem Crash. Das bedeutet, dass korrelierte crashrelevante physikalische Größen erfasst werden. Die Erfassung der beiden physikalischen Größen kann parallel bzw. zeitgleich oder zeitlich versetzt erfolgen. Des Weiteren können gleiche physikalische Größen und/oder unterschiedliche physikalische Größen mit gleichen Messprinzipien und/oder mit verschiedenen Messprinzipien an gleichen und/oder verschiedenen Messorten in gleichen und/oder unterschiedlichen Wertebereichen erfasst werden.
In einem Verfahrensschritt S20.1 werden die erfassten ersten Sensorsignale12.1 und in einem Verfahrensschritt S20.2 werden die zweiten Sensorsignale 22.1 von einer Auswerte- und Steuereinheit 30 ausgewertet und/oder in geeignete Größen umgewandelt. Dies kann beispielsweise den Abzug eines Offsets und/oder die mathematische Berechnung von korrelierten physikalischen Größen beinhalten.
Erfindungsgemäß weist zumindest das erste Sensorelement 12 mindestens einen ersten Zuverlässigkeitsbereich ZB mit einer Obergrenze und/oder einer Untergrenze auf, welcher auf die vom zweiten Sensorelement 22 erfasste zweite physiklasche Größe bezogen wird. Die zweite physikalische Größe beeinflusst hierbei das Messergebnis der vom ersten Sensorelement 12 erfassten physikalischen Größe. Im Schritt S30 wird überprüft, ob das vom ersten Sensorelement 12 ausgegebene Sensorsignal 12.1 plausibel ist. Das erste Sensorsignal 12.1 des ersten Sensorelements 12 ist genau und/oder zuverlässig bzw. plausibel, solange sich die Werte der vom zweiten Sensorelement 22 erfassten zweiten physikalischen Größe innerhalb des Zuverlässigkeitsbereichs ZB des ersten Sensorelements 12 befinden. Deshalb wird im Verfahrensschritt S30 ein vom ersten Sensorelement 12 erfasster aktueller Wert der ersten physikalischen Größe als plausibel erkannt, wenn ein vom zweiten Sensorelement 22 erfasster aktueller Wert der zweiten physikalischen Größe innerhalb des ersten Zuverlässigkeitsbereichs ZB des ersten Sensorelements 12 liegt. Ist dies erfüllt, dann wird im Schritt S30 das entsprechende positive Plausibilitätssignal 36.1 von der Plausibilisierungseinheit 36 der Auswerte- und Steuereinheit 30 an die Entscheidungslogik 38 der Auswerte- und Steuereinheit 30 ausgegeben, so dass die Entscheidungslogik 38 das entsprechende Auslösesignal 38.1 erzeugen und ausgeben kann, wenn weitere Bedingungen erfüllt sind. Ist dies nicht erfüllt, dann wird im Schritt S30 das entsprechende negative Plausibilitätssignal 36.1 von der Plausibilisierungseinheit 36 der Auswerte- und Steuereinheit 30 an die Entscheidungslogik 38 der Auswerte- und Steuereinheit 30 ausgegeben, so dass die Entscheidungslogik 38 unabhängig von weiteren Bedingungen kein Auslösesignal 38.1 erzeugt und ausgibt.

Wie aus Fig. 2 weiter ersichtlich ist, umfasst ein erfindungsgemäßes Verfahren zur Ausgabe eines Auslösesignals 38.1 die oben beschriebenen Verfahrensschritte S10.1 bis S30 und eine weitere Plausibilitätsprüfung. Deshalb wird im Schritt S40 überprüft, ob die Plausibilisierungseinheit 36 der Auswerte- und Steuereinheit 30 ein positives oder negatives Plausibilitätssignal 36.1 an die Entscheidungslogik 38 der Auswerte- und Steuereinheit 30 ausgibt. Wird im Schritt S40 das negative Plausibilitätssignal 36.1 erkannt, dann wird das Verfahren zur Ausgabe eines Auslösesignals 38.1 beendet. Wird im Schritt S40 das positive Plausibilitätssignal 36.1 erkannt, dann wird im Schritt S50 der aktuelle Wert der erfassten ersten physikalischen Größe bzw. des ersten Sensorsignals 12.1 mit einem vorgegeben ersten Schwellwert verglichen. Im Verfahrensschritt S70 wird dann überprüft, ob der aktuelle Wert der erfassten ersten physikalischen Größe bzw. des ersten Sensorsignals 12.1 den ersten Schwellwert übersteigt. Übersteigt der aktuelle Wert der erfassten physikalischen Größe bzw. des ersten Sensorsignals 12.1 den korrespondierenden Schwellwert, dann wird im Schritt S80 das Auslösesignal 38.1 erzeugt und ausgegeben. Das Auslösesignal 38.1 aktiviert beispielsweise ein sicherheitsrelevantes Personenschutzsystem, wie einen Airbag und/oder einen Überrollbügel und/oder einen Gurtstraffer.

Übersteigt der aktuelle Werte der erfassten physikalischen Größe bzw. des ersten Sensorsignals 12.1 nicht den korrespondierenden Schwellwert, dann wird das Verfahren beendet und kein Auslösesignals 38.1 ausgegeben.

Somit überprüft das erfindungsgemäße Verfahren zur Ausgabe eines Auslösesignals 38.1, ob das von den Sensorelementen 12, 22 sensierte Ereignis plausibel ist oder nicht. Das Ereignis ist im dargestellten Ausführungsbeispiel ein Crash bzw. ein Fahrzeugüberschlag, welcher als plausibel erkannt wird, wenn das ermittelte erste Sensorsignal 12.1 einen zugeordneten ersten Schwellwert übersteigt und als plausibel erkannt wird. Das überwachte Auslösekriterium ist erfüllt wenn der aktuelle Wert des ersten Sensorsignals 12.1 den zugeordneten Schwellwert übersteigt und wenn durch das oben beschriebene Verfahren zur Plausibilisierung eines Sensorsignals in den Schritten S10.1 bis S30 mindestens das erste Sensorsignal 12.1 des ersten Sensors 12 als plausibel erkannt wird.

Optional kann im gestrichelt dargestellten Schritt S60 zusätzlich der aktuelle Wert der erfassten zweiten physikalischen Größe bzw. des zweiten Sensorsignals 22.1 mit einem vorgegeben zweiten Schwellwert verglichen werden. Die beiden Schritte S50 und S60 können parallel bzw. zeitgleich oder zeitlich versetzt ausgeführt werden. In diesem Fall wird im Verfahrensschritt S70 dann überprüft, ob der aktuelle Wert der erfassten ersten physikalischen Größe bzw. des ersten Sensorsignals 12.1 den ersten Schwellwert übersteigt und der aktuelle Wert der erfassten zweiten physikalischen Größe bzw. des zweiten Sensorsignals 22.1 den zweiten Schwellwert übersteigt. Übersteigen beide aktuellen Wert der erfassten physikalischen Größen bzw. der beiden Sensorsignale 12.1, 22.1 jeweils den korrespondierenden Schwellwert, dann wird im Schritt S80 das Auslösesignal 38.1 erzeugt und ausgegeben.

Übersteigt bei diesem Ausführungsbeispiel zumindest einer der beiden aktuellen Werte der erfassten physikalischen Größen bzw. der Sensorsignale 12.1, 22.1 nicht den korrespondierenden Schwellwert, dann wird das Verfahren beendet und kein Auslösesignals 38.1 ausgegeben.

Somit überprüft das erfindungsgemäße Verfahren zur Ausgabe eines Auslösesignals 38.1 bei diesem Ausführungsbeispiel, ob das von den Sensorelementen 12, 22 sensierte Ereignis plausibel ist oder nicht. Das Ereignis ist im dargestellten Ausführungsbeispiel ein Crash bzw. Fahrzeugüberschlag, welcher als plausibel erkannt wird, wenn die ermittelten Sensorsignale 12.1, 22.1 jeweils einen ihnen zugeordneten Schwellwert übersteigen und zumindest das erste Sensorsignal 12.1 plausibel ist. Das überwachte Auslösekriterium ist erfüllt, wenn der aktuelle Wert des ersten Sensorsignals 12.1 und der aktuelle Wert des zweiten Sensorsignals 22.2 jeweils den ihnen zugeordneten Schwellwert übersteigen und wenn durch das oben beschriebene Verfahren zur Plausibilisierung eines Sensorsignals in den Schritten S10.1 bis S30 mindestens das erste Sensorsignal 12.1 des ersten Sensors 12 als plausibel erkannt wird.

In einem nicht dargestellten alternativen Ausführungsbeispiel kann zuerst überprüft werden, ob der aktuelle Wert der erfassten ersten physikalischen Größe bzw. des ersten Sensorsignals den ersten Schwellwert übersteigt und der aktuelle Wert der erfassten zweiten physikalischen Größe bzw. des zweiten Sensorsignals den zweiten Schwellwert übersteigt, bevor überprüft wird, ob zumindest das erste Sensorsignal plausibel ist. Alternativ können diese Überprüfungen parallel bzw. zeitgleich erfolgen.

Ebenso ist es möglich, dass ein drittes nicht dargestelltes Sensorelement die ersten Sensorsignale 12.1 des ersten Sensorelements 12 und/oder die zweiten Sensorsignale 22.1 des zweiten Sensorelements 22 plausibilisiert. Hierbei weisen das erste Sensorelement 12 und das zweite Sensorelement 22 jeweils einen Zuverlässigkeitsbereich ZB auf, welcher auf eine physikalische Größe bezogen ist, welche von dem dritten Sensorelement erfasst und in dritte Sensorsignale umgewandelt wird.

## Patentansprüche

1. Verfahren zur Erzeugung eines Auslösesignals, wobei ein erstes Sensorelement (12) mindestens eine erste physikalische Größe erfasst und ein entsprechendes erstes Sensorsignal (12.1) erzeugt, wobei ein zweites Sensorelement (22) eine zur ersten physikalischen Größe korrelierte zweite physikalische Größe erfasst und ein entsprechendes zweites Sensorsignal erzeugt, und wobei zur Überwachung eines Auslösekriteriums das aktuelle erste Sensorsignal (12.1) mit einem ersten Schwellwert und das aktuelle zweite Sensorsignal (22.2) mit einem zweiten Schwellwert verglichen wird, **dadurch gekennzeichnet, dass** das erste Sensorelement (12) funktionstüchtig ist und zumindest das erste Sensorelement (12) mindestens einen ersten Zuverlässigkeitsbereich (ZB) mit einer Obergrenze und/oder einer Untergrenze aufweist, welcher auf die vom zweiten Sensorelement (22) erfasste zweite physiklasche Größe bezogen wird, und das Auslösekriterium erfüllt wird und das Auslösesignal (38.1) ausgegeben wird, wenn das aktuelle erste Sensorsignal (12.1) des ersten Sensorelements (12) den zugeordneten ersten Schwellwert übersteigt und wenn mindestens das erste Sensorsignal (12.1) des ersten Sensorelements (12) als zuverlässig erkannt wird, wobei ein vom ersten Sensorelement (12) erfasster aktueller Wert der ersten physikalischen Größe als zuverlässig erkannt wird, wenn ein vom zweiten Sensorelement (22) erfasster aktueller Wert der zweiten physikalischen Größe innerhalb des korrespondierenden ersten Zuverlässigkeitsbereichs (ZB) des ersten Sensorelements (12) liegt.

2. Verfahren nach Anspruch 1, **dadurch gekennzeichnet, dass** die beiden Sensorelemente (12, 22) die physikalischen Größen mit gleichen Messprinzipien und/oder mit verschiedenen Messprinzipien an gleichen und/oder verschiedenen Messorten erfassen.

3. Verfahren nach Anspruch 1 oder 2, **dadurch gekennzeichnet, dass** durch die beiden Sensorelemente (12, 22) eine Beschleunigung und/oder ein Druck und/oder ein Körperschall und/oder eine Drehrate erfasst werden.

4. Verfahren nach Anspruch 3, **dadurch gekennzeichnet, dass** die beiden Sensorelemente (12, 22) crashrelevante physikalische Größen erfassen.

5. Verfahren nach Anspruch 3 oder 4, **dadurch gekennzeichnet, dass** das Auslösesignal (38.1) ein sicherheitsrelevantes System aktiviert.

## Claims

1. Method for generating a trigger signal, wherein a first sensor element (12) records at least one first physical variable and generates a corresponding first sensor signal (12.1), wherein a second sensor element (22) records a second physical variable correlated with the first physical variable and generates a corresponding second sensor signal, and wherein, in order to monitor a trigger criterion, the current first sensor signal (12.1) is compared with a first threshold value and the current second sensor signal (22.2) is compared with a second threshold value, **characterized in that** the first sensor element (12) is functional and at least the first sensor element (12) has at least one first reliability range (ZB) which has an upper limit and/or a lower limit and is based on the second physical variable recorded by the second sensor element (22), and the trigger criterion is satisfied and the trigger signal (38.1) is output if the current first sensor signal (12.1) from the first sensor element (12) exceeds the associated first threshold value and if at least the first sensor signal (12.1) from the first sensor element (12) is identified as reliable, wherein a current value of the first physical variable recorded by the first sensor element (12) is identified as reliable if a current value of the second physical variable recorded by the second sensor element (22) is within the corresponding first reliability range (ZB) of the first sensor element (12).

2. Method according to Claim 1, **characterized in that** the two sensor elements (12, 22) record the physical variables using identical measurement principles and/or using different measurement principles at identical and/or different measuring locations.

3. Method according to Claim 1 or 2, **characterized in that** an acceleration and/or a pressure and/or a structure-borne sound and/or a rotation rate is/are recorded by the two sensor elements (12, 22).

4. Method according to Claim 3, **characterized in that** the two sensor elements (12, 22) record crash-relevant physical variables.

5. Method according to Claim 3 or 4, **characterized in that** the trigger signal (38.1) activates a safety-relevant system.

## Revendications

1. Procédé destiné à générer un signal de déclenchement, dans lequel un premier élément capteur (12) détecte au moins une première grandeur physique et génère un premier signal de capteur (12.1) correspondant, dans lequel un deuxième élément capteur (22) détecte une deuxième grandeur physique corrélée à la première grandeur physique et génère un deuxième signal de capteur correspondant, et dans lequel, pour surveiller un critère de déclenchement, le premier signal de capteur (12.1) actuel est comparé à une première valeur de seuil et le deuxième signal de capteur (22.2) actuel est comparé à une deuxième valeur de seuil,
**caractérisé en ce que** le premier élément capteur (12) est fonctionnel et **en ce qu'**au moins le premier élément capteur (12) présente au moins une plage de fiabilité (ZB) ayant une borne supérieure et/ou une borne inférieure qui se rapporte à la deuxième grandeur physique détectée par le deuxième élément capteur (22) et **en ce que** le critère de déclenchement est satisfait et le signal de déclenchement (38.1) est délivré lorsque le premier signal de capteur (12.1) actuel du premier élément capteur (12) dépasse la première valeur de seuil associée et lorsqu'au moins le premier signal de capteur (12.1) du premier élément capteur (12) est identifié comme étant fiable, dans lequel une valeur actuelle de la première grandeur physique, détectée par le premier élément capteur (12), est identifiée comme étant fiable lorsqu'une valeur actuelle de la deuxième grandeur physique, détectée par le deuxième élément capteur (22), se situe à l'intérieur de la première plage de fiabilité (ZB) correspondante du premier élément capteur (12).

2. Procédé selon la revendication 1, **caractérisé en ce que** les deux éléments capteurs (12, 22) détectent les grandeurs physiques selon des principes de mesure identiques et/ou selon des principes de mesure différents à des emplacements de mesure identiques et/ou différents.

3. Procédé selon la revendication 1 ou 2, **caractérisé en ce qu'**une accélération et/ou une pression et/ou un bruit de structure et/ou une vitesse de rotation est/sont détecté(s) par les deux éléments capteurs (12, 22).

4. Procédé selon la revendication 3, **caractérisé en ce que** les deux éléments capteurs (12, 22) détectent des grandeurs physiques ayant trait aux collisions.

5. Procédé selon la revendication 3 ou 4, **caractérisé en ce que** le signal de déclenchement (38.1) active un système ayant trait à la sécurité.
